# EUROPÄISCHE PATENTANMELDUNG

(11) **EP 0 736 751 A2**
(43) Veröffentlichungstag der Anmeldung: **09.10.1996**
(21) Anmeldenummer: 96105109.1
(22) Anmeldetag: 29.03.1996
(51) Int. Cl.: G01F 15/06, G01F 15/02

(54) **Anordnung zur Verbrauchsmessung**

(30) Priorität: 06.04.1995 DE 19513036
(71) Anmelder: SIEMENS AKTIENGESELLSCHAFT, 80333 München (DE)
(72) Erfinder: Greppmaier, Paul, 90475 Nürnberg (DE)

(57) **Zusammenfassung**

Zur Verbrauchsmessung in einer Versorgungsanlage für fließende Medien mit mehreren Erfassungsstellen, z.B. einer Hauswasserversorgung, ist eine Anordnung (1) vorgesehen, bei der je Erfassungsstelle ein Durchflußmesser (3,5,6,7) vorhanden ist, der jeweils zwei Ultraschallsensoren (22a,22b) umfaßt. Die Durchflußmesser (3,5,6,7) sind jeweils über zumindest eine Verbindungsleitung (9,13) mit einer zentralen Elektronik (11) verbunden, die Sende- und Empfangsmittel (25) für die Ultraschallsensoren (22a,22b) und Mittel zur Ermittlung und Ausgabe der jeweils erfassten Verbrauchswerte aufweist.

## Beschreibung

Die Erfindung betrifft eine Anordnung zur Verbrauchsmessung in einer Versorgungsanlage für fließende Medien.

Zur Erfassung von verschiedenen Verbrauchsparametern für fließende in Wohneinheiten ist es bisher üblich, für jeden Parameter eine eigene Erfassungseinrichtung vorzusehen. Dazu ist beispielsweise ein Wärmemengenzähler, ein Brauchwarmwasserzähler und ein Kaltwasserzähler für jede Wohneinheit vorgesehen. Bei einer Verwendung von Ultraschall-Durchflußmengenmessern weist dabei jedes Gerät eine eigene Elektronik auf. Die jeweiligen Zählgeräte müssen einzeln abgelesen werden, wobei unter Umständen unterschiedliche Einbauorte das Ablesen erschweren.

Aus der "Siemens-Zeitschrift", 48.Jahrgang, Heft 9, 1974, Seiten 736 bis 739 ist ein modulares System für das dezentrale Erfassung und Registrieren von Daten bekannt, das jedoch lediglich für Elektrizitätszähler ausgelegt ist. Aus der DE 44 09 803 ist eine Anordnung bekannt, bei der eine zentrale drahtlose Verbrauchsdatensammlung erfolgt.

Der Erfindung liegt die Aufgabe zugrunde, das Erfassen oder Ablesen von Verbrauchswerten von fließenden Medien zu vereinfachen, wobei der Aufwand möglichst gering gehalten werden soll.

Die Lösung gelingt erfindungsgemäß mit einer Anordnung gemäß den Merkmalen des Anspruchs 1.

Auf diese Weise sind bei einer derartigen Anordnung erhebliche Einsparungen möglich, da den Erfassungsstellen nur noch mechanische Komponenten zugeordnet sind. Alle elektronischen Komponenten sind konsequent zentral angeordnet. Es wird also nur eine zentrale Elektronik benötigt. Je Verbrauchswert oder Erfassungsstelle ist dabei nur der eigentliche Sensor vorzusehen. Da auch nur eine Ablesestelle pro Wohneinheit oder Anlage benötigt wird, entfallen z. B. auch störende Geräte in der Wohnung.

Der dezentrale Elektronikanteil entfällt gegenüber dem S.d.T, wodurch die Anfälligkeit der Anordnung gegenüber Störungen verringert ist. Dies gilt insbesondere, wenn die Sensoren an ungeschützten Orten oder in einer schmutzigen Umgebung untergebracht sind. Für alle Sensoren ist ein einheitliches Durchflußmeßsystem verwendet. Alternativ ist es auch denkbar, daß in der Elektronik Mittel zum Betrieb unterschiedlicher Durchflußsysteme oder auch Mittel zum Verarbeiten von Informationen anderer Zähleinrichtungen, z.B. eines Elektrizitätszählers, untergebracht sind.

Es ist zweckmäßig, wenn zumindest ein Durchflußmesser einen zusätzlichen Temperatursensor aufweist, dessen erfaßte Meßwerte zusätzlich der zentralen Einrichtung zur Berechnung eines Energiewertes zugeführt sind. Bei einer derartigen Anordnung ist einen Erweiterung der zentralen Funktionen gegeben, wodurch nochmals ein Spareffekt gegeben ist.

Für Heizungswasser ist bevorzugt eine Vor- und Rücklauftemperaturmessung mit einem weiteren Temperatursensor vorgesehen, so daß gemeinsam mit der Durchflußmessung der Energieverbrauch in der Zentrale erfaßt und berechnet werden kann. Bevozugt ist die zentrale Elektronik einem der Durchflußmesser zugeordnet oder bei diesem angeordnet. Dadurch ist kein separater Aufstellungsort für die Elektronik erforderlich. Sie kann einfach am Durchflußmesser befestigt sein, wobei die Verbindungsleitungen zu den übrigen Durchflußmessern einfach angekoppelt sind.

Als Aufstellungsort für die Elektronik wird bevorzugt ein Ort gewählt, der günstige Betriebsbedingungen gewährleistet. Dies kann beispielsweise ein trockener, staubfreier und beheizter Raum sein. Durch die neue Anordnung ist die Elektronik nicht mehr unweigerlich den Umgebengsbedingungen des Aufstellungsortes des Durchflußmessers ausgesetzt.

Die Elektronik weist bevorzugt eine Schalteinrichtung zur zyklischen Aktivierung der Durchflußmesser auf. Sie ist mit Vorteil als Multiplexer ausgebildet.

Wesentlicher Kern der Erfindung ist, daß die einzelnen Durchflußmesser keinerlei eigene Elektronik - auch keine Hilfselektronik - aufweisen. Die zentrale Elektronik umfasst alle für die Erfassungsstellen und deren Sensoren nötigen Ver- und Entsorgungskomponenten. Eine bevorzugte Anwendung der Erfindung ist bei Versorungsanlagen von Wohnungen, z. B. bei größeren Wohnanlagen oder Hochhäusern, gegeben. Es ist auch eine Anwendung in Industrieanlagen oder Fabriken möglich.

Die Erfindung, weitere Details und Vorteile werden nachfolgend anhand der Zeichnung beispielhaft näher erläutert. Es zeigen:

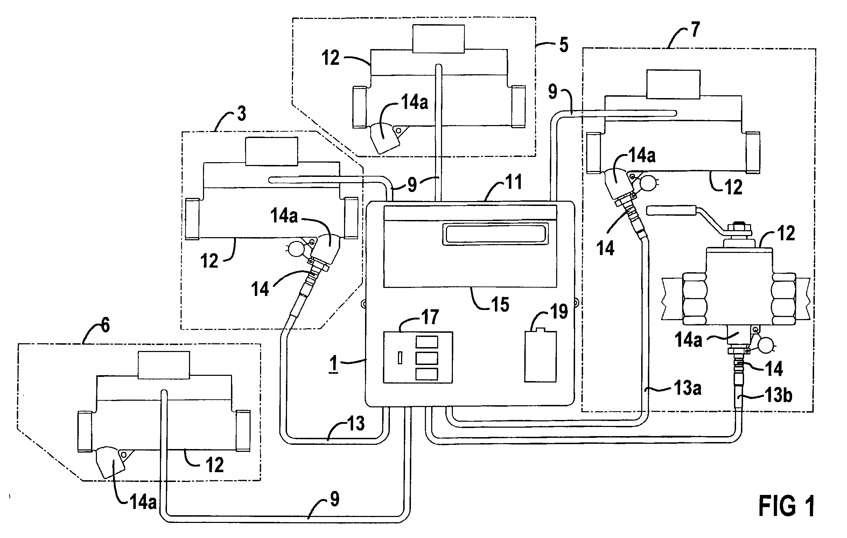

FIG 1 eine Anordnung zur Verbrauchsmessung und
FIG 2 ein Blockschaltbild hierzu.

Die FIG zeigt eine Anordnung 1 zur Erfassung von Verbrauchswerten für fließende Medien, z.B. Wasser oder Gas. Die Anordnung 1 kann beispielsweise in einer Wohnanlage oder auch in einem Industriebetrieb installiert sein. Es gilt dabei verschiedene Verbrauchswerte einer nicht näher gezeigten Versorgungsanlage zentral zu erfassen. Beispielhaft sind ein Warmwasserzähler 3, ein Kaltwasserzähler 5, ein Gaszähler 6 und ein Heizungswasserzähler 7 vorgesehen. Bevorzugt arbeiten die Zähler nach dem gleichen Durchflußsystem, vorliegend einem Ultraschallverfahren. Es ist jedoch auch die Ankopplung verschiedener Systeme denkbar. Zusätzlich ist ggf. auch eine Ankopplung eines Elektrizitätszählers denkbar.

Die Zähler 3,5,6,7 sind jeweils über entsprechende Verbindungsleitungen 9 mit einer zentralen Elektronik 11 verbunden. Die zentrale Elektronik 11 umfaßt mehrere Funktionen. Für den Betrieb der Ultraschalldurchflußmesser 3,5,6,7 muß einerseits diesen ein Ultraschallsignal zugeführt und andererseits von diesen ein Ultraschallmeßsignal abgenommen werden. Die zentrale Elektronik 11 weist daher Sende- und Empfangsmittel auf. Die Verbindungsleitungen 9 sind daher doppelkanalig ausgelegt. Die Sende- und Empfangsmittel können für jeden Zähler einzeln oder für alle gemeinsam vorgesehen sein. Mit der zentralen Elektronik 11 werden über eine in dieser Figur nicht näher gezeigte Umschalteinrichtung mehrere Volumenmeßteile nacheinander für den Zeitpunkt der Messung miteinander verbunden.

Der Warmwasserzähler 3 und der Heizungswasserzähler 7 weisen zusätzlich noch Datenleitungen 13, 13a, 13b auf, die für die Übertragung eines Signals für die jeweilige Temperatur zuständig sind. Beim Heizungswasserzähler 7 ist eine erste Datenleitung 13a für die Vorlauftemperatur und eine zweite Datenleitung 13b für die Rücklauftemperatur vorgesehen.

Die Datenleitungen 13,13a,13b sind dabei jeweils mit einem Temperatursensor 14 verbunden, die jeweils in Flanschen 14a der jeweiligen Rohranschlußstücke 12 angeordnet sind. Die Rohranschlußstücke 12 sind jeweils in eine nicht näher gezeigte Leitung eingebaut, in der der zuerfassende Medienfluß stattfindet. Sie können standardmäßig einen Flansch 14a zur Aufnahme eines Sensors aufweisen. Gegebenenfalls können die jeweiligen Verbindungsleitungen 9 mit ihren jeweils zugeordneten Datenleitungen 13,13a,13b von einer gemeinsamen Leitung gebildet sein. Der Kaltwasserzähler 5 kann als reiner Durchflußmesser ausgeführt sein. Obtional kann er zusätzlich eine Temperaturmessung, z. B. mit einem Fühler oder einem Festwiderstand zur Messung des Energieverbrauchs, umfassen. Das Meßprinzip der Temperaturmessung ist beliebig.

Die zentrale Elektronik 11 kann als seperates Gerät ausgeführt und an einem zentralen Ort aufgestellt sein oder auch einem der Zähler, beispielsweise als Aufsatzgerät, zugeordnet sein. Die zentrale Elektronik 11 umfaßt ein Display 15 zur Anzeige von Funktionen oder Informationen, eine Tastatur 17 zur Eingabe von Daten oder zum Abrufen von Funktionen und eine Schnittstelle 19, an die beispielsweise ein Parametriergerät oder eine Datenleitung für eine Datenfernübertragung angeschlossen werden kann.

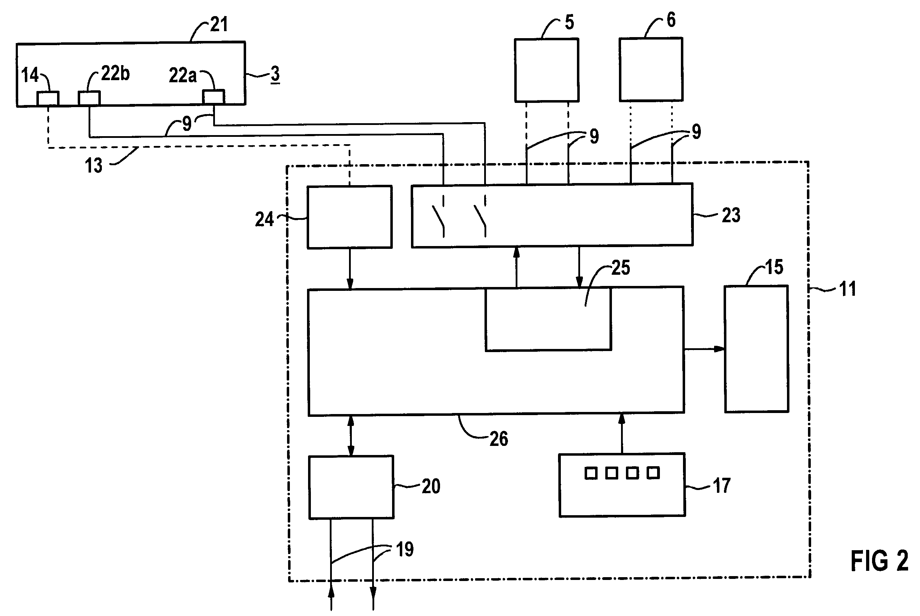

Die Funktion der Anordnung 1 wird nachfolgend anhand eines Blockschaltbildes in FIG 2 näher erläutert. Zur Erläuterung des Funktionsprinzips ist hier lediglich der Warmwasserzähler 3 näher gezeigt. In seinem Meßrohr 21 weist er einen Temperatursensor 14 und zwei Ultraschallsensoren 22a,22b auf. Der Sensor 22a arbeitet dabei als Sender und der Sensor 22b als Empfänger. Es ist auch möglich die Meßrichtung zu wechseln. Die Sensoren 22a,22b und der Temperatursensor 14 sind über ihre Leitungen 9 bzw. 13 mit einer Schalteinrichtung 23 der zentralen Elektronik 11 verbunden. An die Schalteinrichtung 23 sind auch weitere Meßeinrichtungen, beispielsweise der Kaltwasserzähler 5 und der Gaszähler 6 angeschlossen. Der Temperatursensor 14 ist mit einem Auswertebaustein 24 verbunden.

Die Verbindungsleitungen 9 der jeweiligen Zähler 3,5,6 werden nun zyklisch von der Schalteinrichtung 23 an eine Sende- und Empfangseinrichtung 25 angeschaltet, so daß die jeweiligen Zähler 3 bis 6 nach Art einer multiplexen Ansteuerung zyklisch aktiviert sind. Alternativ kann hier natürlich auch für jeden Zähler 3 bis 6 eine getrennte Sende- und Empfangseinrichtung vorgesehen werden.

Gegebenenfalls kann auch nur die als Sender arbeitenden Sensoren parallel mit einem Sendesignal beaufschlagt sein, so daß nur die Empfangssensoren wechselweise oder zyklisch aktiviert werden.

Die erhaltenen Informationen über die Durchflußmenge und gegebenenfalls der Temperatur werden dann von einem zentralen Rechenbaustein 26 ausgewertet. An den zentralen Rechenbaustein 26 sind des weiteren das Display 15, die Tastatur 17 und ein Schnittstellenbaustein 20 angeschlossen. Der Rechenbaustein 26 sorgt einerseits für die Aufbereitung der erfassten Meßdaten sowie auch für den Informationsaustausch mit der jeweils angeschlossenen Informationseinheit.

Ist beispielsweise der oben beschiebene Heizungswasserzähler 7 angeschlossen, so kann durch das Ermitteln der Durchflußmenge und des Temperaturunterschiedes zwischen Vor- und Rücklauftemperatur die entnommene Energiemenge berechnet werden. Bevorzugt ist die zentrale Elektronik 11 als Erfassungseinrichtung mit einem nicht näher gezeigten Mikrocomputer ausgerüstet.

Die in der FIG 2 gezeigten Funktionsblöcke können je nach Anforderung oder Bedarf als Soft- oder Hardwarebausteine ausgeführt sein. Bevorzugt werden für Funktionen, die mehrfach anfallen, Bausteine eingesetzt, die mehrfach verwendbar sind. Beispielsweise kann daher auch die Schalteinrichtung 23 noch weitere Schaltkanäle für Temperaturdaten umfassen, so daß lediglich ein Auswertebaustein 24 für mehrere Zähler benötigt wird.

Das Display 15 kann einerseits zur Anzeige und zum Ablesen der Verbrauchswerte dienen. Andererseits können auch weitere Informationen, z. B. Geräteinformation oder Parameter, abgefragt werden, wobei der Abruf über die Tastatur 17 erfolgt. Meßwerte und Daten können alternativ auch über die Schnittstelle 19 erfaßt oder weitergeleitet werden. Gegebenenfalls können die Verbrauchswerte auch an eine übergeordnete zentrale Einrichtung, z. B. zur Fernablesung, übertragen werden. Es ist dabei auch denkbar, daß von der Ferne her eine Ferneinstellung- oder Parametrierung der zentralen Elektronik 11 erfolgt.

## Patentansprüche

1. Anordnung (1) zur Verbrauchsmessung in einer Versorgungsanlage für fließende Medien mit mehreren Erfassungsstellen für Verbrauchswerte,
- bei der je Erfassungsstelle zwei Ultraschallsensoren (22a,22b) vorgesehen sind,
- wobei die Ultraschallsensoren (22a,22b) über zumindest eine Verbindungsleitung (9,13) mit einer zentralen Elektronik (11) verbunden sind,
- wobei die zentrale Elektronik (11) Sende- und Empfangsmittel (25) für die Ultraschallsensoren (22a,22b) und Mittel zur Ermittlung und Ausgabe der Verbrauchswerte aufweist.

2. Anordnung nach Anspruch 1, wobei zumindest eine Erfassungsstelle einen zusätzlichen Temperatursensor (14) aufweist, dessen erfaßte Meßwerte der zentralen Elektronik (11) zur Berechnung eines Energiewertes zugeführt sind.

3. Anordnung nach Anspruch 2, wobei für eine Vor- und Rücklauftemperaturmessung ein weiterer Temperatursensor (14) vorgesehen ist und in der zentralen Elektronik (11) ein Energieverbrauch errechnet wird.

4. Anordnung nach einem der Ansprüche 1 bis 3, wobei die zentrale Elektronik (11) bei einer der Erfassungsstellen angeordnet ist.

5. Anordnung nach einem der Ansprüche 1 bis 4, wobei als Mittel zur Ausgabe ein Display (15) oder eine Schnittstelle (19) vorgesehen ist.

6. Anordnung nach einem der Ansprüche 1 bis 5, wobei weitere Sende- und Empfangsmittel für weitere Ultraschallsensoren mit abweichendem Messsystem vorgesehen sind.

7. Anordnung nach einem der Ansprüche 1 bis 6, wobei die Elektronik (11) eine Schalteinrichtung (23) zur zyklischen Aktivierung der Ultraschallsensoren umfaßt.

8. Anordnung nach Anspruch 7, wobei gemeinsame Sende- und Empfangsmittel (25) für alle Ultraschallsensoren vorgesehen sind.
